# EUROPEAN PATENT APPLICATION

(11) **EP 2 214 453 A1**
(43) Date of publication of application: **04.08.2010**
(21) Application number: 07845743.9
(22) Date of filing: 29.11.2007
(51) Int. Cl.: H04W 84/08

(54) **METHOD AND DEVICE FOR UPDATING GROUP INFORMATION IN CLUSTER SYSTEM**

(30) Priority: 22.10.2007 CN 200710176180
(71) Applicant: ZTE Corporation, Shenzhen, Guangdong 518057 (CN)
(72) Inventor: ZHOU, Yanfang, Guangdong 518057 (CN); ZHU, Jinlei, Guangdong 518057 (CN); GAO, Juhui, Guangdong 518057 (CN)
(74) Representative: Ilgart, Jean-Christophe
(86) International application number: PCT/CN2007/003378
(87) International publication number: WO 2009/052665

(57) **Abstract**

A method and device for updating group information in a PTT system, the method comprises: Step 1, while performing a group change operation on a terminal, the network side judges whether a group information change caused by the group change operation is valid according to a pre-defined validity rule; if yes, execute Step 2, otherwise, end the process; Step 2, update the caused group information change to the terminal. The device comprises: validity judgment means, configured to judge whether the group information change caused by a group change operation is valid according to a pre-defined validity rule while performing the group change operation on a terminal; group information updating means, configured to update a valid group information change caused by the valid group change operation to the terminal.

## Description

### Field of the Invention

The present invention relates to the field of Push To Talk, PTT, technology, in particular to a method and device for updating group information in a PTT system.

### Background of the Invention

The PTT telecommunication system was born in 1970s. The earliest PTT telecommunication system is analog system. Digital PTT technology appeared worldwide in the middle 1990s. The digital PTT system mainly includes: terminal, base station sub-system, PTT Dispatch Server, PDS, PTT Home Register, PHR, configuration station, reception station and administration station. The main characteristics of PTT technology are dispatching and group calling. The dispatching function of PTT calling means that a call is initiated to a certain number of terminals simultaneously to enable these terminals to take part in one call at the same time; the function of group calling for PTT service means calling a group number at a communication terminal, wherein all the terminals in a group can be connected to one call so as to achieve the effect of multi-person communication.

In practical application, a PTT system often performs group change operation to a certain terminal and dynamically modifies the information of a group to which a certain terminal belongs, mainly including: adding a terminal into a group, deleting a terminal from a group, modifying the information of the group that a terminal belongs to, modifying the member attributes of a terminal as a member in a certain group, dynamically regrouping a terminal or a group to another mother group, and canceling the dynamic regrouping of a terminal or a group from a dynamically regrouped mother group, etc. Therefore, a method needs to be provided to ensure that the group information stored on the terminal side in a PTT system is consistent with the group information on the network side corresponding to the terminal.

Therefore, the prior art provides some concrete group information updating methods, for instance, Chinese patent application numbers CN1909716, CN1599326, and CN1595999. Their common point lies in that while the network side modifying the group information, the network side initiates the group information updating, thus the related group information can be obtained in the terminal. China patent application number CN1937833 provides a method for realizing the group information updating of a roaming terminal in a PTT system. In addition, in order to ensure that all the group information of a specific terminal on the network side are the same as all the group information stored on a terminal, China patent application number CN1917671 provides a method for synchronizing the group information of a terminal side and a network side in a PTT communication system, which comprises the following steps: the communication terminal generates a random number according to the group information stored in the terminal, performs the calculation with the random number and group information of each group, and generates a checksum for the terminal side; the communication terminal side sends the random number and checksum to the network side; the network side performs the calculation through the same calculation method with the successfully updated group information of the network side, then generates the checksum of the network side; the network side makes a comparison between the received checksum of the terminal side and the checksum of the network side from calculation; if the results are not matched, the network side notifies the terminal to delete all the stored group information, and initiates the updating of all the group information to which the terminal belongs; if the results are matched, the network side checks whether there is more group information that needs to be updated, if yes, the group updating is initiated, otherwise, the group updating is not initiated.

In the current PTT system, a terminal can join a group as a group member, or be dynamically regrouped to a group, or its group can be dynamically regrouped to another group. Thus, a terminal can exist in a group with multiple identities. Under this situation, the group modification operation to a terminal can include: adding a terminal into one or more groups, dynamically regrouping a terminal to one or more groups, deleting a terminal from one or more groups, cancelling a terminal from one or more dynamically regrouped groups, dynamically regrouping one or more groups to another mother group, and cancelling the dynamic regrouping of one or more groups from a dynamically regrouped mother group etc. The service rules used in the case that a terminal exists in a group with various identities are: when a group is being called, the direct members, dynamically regrouped members, and the group members of a sub-group that is dynamically regrouped to the group can all be called, and all the information of the groups that the terminal can take part in call is stored in the terminal. According to the service rules, when performing a group modification operation, adding the terminal to a group not only need to store the joined group in the terminal, but also should keep the mother group to which the joined group is dynamically regrouped in the terminal; when modifying the group information, it needs not only to modify the group information stored in the terminals as group members, but also to modify the corresponding group information for the terminals that are dynamically regrouped to the group, and the corresponding group information for the group members of the sub-groups; when deleting the terminal from a group with one identity, the group information cannot be deleted from the terminal as long as it still exists in the group with other identities. However, the methods of the prior art do not consider the situation that how to update the group information correctly when a terminal exists in a group with various identities. For example, upon using the updating methods in the art, when a terminal is deleted regarding any identity from a group, the network side updates the terminal with the group information change caused by the deletion operation record, resulting in that the terminal deletes the group information stored therein. In fact, the terminal can also exist in the group with other identities, and thus the deletion operation causes a mismatch between the group information on the network side and that on the terminal side.

In addition, none of the above mentioned methods in the prior art mentions the sequence issue of controlling the update of the group information which results in that the group information cannot be correctly updated to the terminal in some cases. For instance, the terminal of the current PTT system can join a plurality of groups, due to the limited capacity of telephone directory of the terminal, if the terminal is first added to the maximum number of allowed groups, then the following group modification operation is performed on the terminal: delete the terminal from some groups. If the terminal joins some other groups before the deleted group information is updated to the terminal. If the network side does not control the sequence of group information updating while notifying the terminal of the group information update, the newly-added group information reaches the terminal first and the terminal refuses to add new group information due to the full telephone directory. In fact, the number of groups that the terminal joins has not yet exceeded the capacity allowed by the terminal, resulting in a not very good experience to users. When such kind of mistake occurs, if the system process continues to update other group information, the groups need to be deleted are deleted in this updating and the newly-added groups are updated to the terminal in the next updating; if the system process does not continue to update other group information after such a mistake happens, it may take many times to correctly update all the group information to the terminal, which fully depends on the sequence of updated information reaching the terminal.

The method for keeping group information synchronized provided by China patent No. CN1917671 can also not solve the problem. The verification of group information updated to the terminal is matched between the terminal side and the network side, so no group information synchronization is initiated. In addition, even if the system process is that the group information synchronization is performed when such a mistake happens, the system resources are wasted if the terminal joins many groups but only a few of them actually need to be updated.

### Summary of the Invention

The present invention aims at providing a method for updating group information in a PTT system to solve the technical problem of correct group information updating when a terminal exists in a group with a plurality of identities, which is not considered in the prior art.

In order to realize the above objective, the invention provides a method for updating group information in a PTT system, wherein, which comprises the following steps:
Step 1, when the group change operation is performed on a terminal in a PTT system, the network side of a PTT system of the PTT system judges whether a group information change caused by the group change operation is valid or not according to a pre-defined validity rule; if yes, Step 2 is performed, otherwise, the process is ended; Step 2, the group information change caused by the group change operation is updated to the terminal.
   Wherein, the network side of the PTT system performs the validity judgment upon recording the group change operation particularly comprises:
   when the group change operation is an operation of deleting the terminal with one or more identities from a group, the network side judges whether the terminal exists in the group without any identity other than the one or more identities of the deletion; if yes, a deletion updating record caused by the deletion operation is valid, recording the deletion updating record in the PHR, and a newly-adding updating record and a modification updating record that have already existed in the PHR prior to recording the deletion updating record are invalid;
   otherwise, the deletion updating record caused by the deletion operation is invalid and is not record the deletion updating record.

The method further comprises:
when the group change operation is a newly-adding operation of joining a group with one or more identities, judge whether a deletion updating record has been recorded in the PHR; if yes, combine the newly-adding updating record and the deletion updating record into one modification updating record, or directly record the newly-adding updating record and control, upon updating, the updating sequence as deletion first followed by new-adding.

Wherein, the network side of the PTT system performs the validity judgment upon performing group information updating, particularly comprises:
Step a, when the group change operation is performed on the terminal in the PTT system, the PHR on the network side records the group change operation, and generates a corresponding group information change record caused by the corresponding group change operation;
Step b, a PDS on the network side sends a group updating request to the PHR;
Step c, the PHR judges whether the terminal exists in the group without any identity according to the recorded group information change caused by the group change operation; if yes, in the group information change caused by the group change operation, a recorded deletion updating record is valid, and a recorded newly-adding updating record and a recorded modification updating record are invalid; otherwise, in the group information change caused by the group change operation, the deletion updating record is invalid, and the newly-adding updating record and the modification updating record are valid.

The method, wherein, Step c comprises:
the PHR combines the recorded deletion updating record prior recorded and the recorded newly-adding updating record posterior recorded in the group information change caused by the group change operation into one modification updating record ;
after the combination is performed, the PHR judges whether the terminal exists in the group without any identity; if yes, in the group information change caused by the group change operation, the recorded deletion updating record is valid, and the recorded newly-adding updating record and the recorded modification updating record are invalid; otherwise, in the group information change caused by the group change operation, the recorded deletion updating record is invalid ,and the recorded newly-adding updating record and the recorded modification updating record is valid.

The method, wherein, Step a comprises:

when the group change operation is a deletion operation, if there already exists a deletion updating record for the group, no new record is added; and if the terminal is a direct member of the group, it is further comprised to add a deletion updating record for each mother group of the group;
when the group change operation is a new-adding operation, if there is only a corresponding modification updating record of the group in the existing group updating record, no updating record is newly added;
when the group change operation is a modification operation, if a deletion updating record stored, delete the deletion updating record; and if there is already a corresponding modification updating record, no new updating record is newly added, otherwise, a modification updating record corresponding to the modification f operation is newly added.

Wherein, the network side of the PTT system perform the validity judgment upon performing group information updating, particularly comprises:
when the group change operation is performed on the terminal in the PTT system, the PHR on the network side records the group change operation;
the PDS on the network side sends a group updating request to the PHR;
when there are both newly-adding updating record and a deletion updating record are recorded in the PHR, judge whether the terminal exists in the group without any identity; if yes, in the group updating record, the recorded deletion updating record is valid and the recorded newly-adding updating record and the recorded modification updating record are invalid; otherwise, the newly-adding updating and the deletion updating are valid, and perform first the group information updating for the deletion updating record, then perform the group information updating for the newly-adding updating record; and when there is a modification updating record, perform the group information updating for the modification operation after perform the group information updating for the newly-adding operation.

In Step 2 of the method, the network side updates the group information change caused by the group change operation of the terminal to the terminal according to a pre-defined sequence.

In the method, the pre-defined sequence is: the deletion updating record is updated before the newly-adding record.

In the method, the pre-defined sequence further comprises: a synchronization updating record notifying the terminal to delete all the group information is performed first; the deletion updating record is updated before the modification updating record; and the newly-adding updating record is updated before the modification updating record.

The invention discloses a device for updating the group information in a PTT system, which wherein comprises:
validity judgment means, set on the network side of the PTT system, configured to judge whether a group information change caused by a group change operation is valid according to a pre-defined validity rule while performing the group change operation on a terminal;
group information updating means, configured to update a valid group information change, which is confirmed by the validity judgment means and caused by the group change operation to the terminal.

In the device, the validity judgment means is set in the PHR on the network side to perform the judgment when the group information change caused by the group change operation is being recorded or a group information updating is being performed.

The invention further discloses a method for updating the group information in a PTT system, which wherein comprises the following steps:
Step 1, when a group change operation is performed on a terminal in the PTT system, the network side of the PTT system records a group information change caused by the group change operation;
Step 2, the network side updates the group information change caused by the group change operation to the terminal according to a pre-defined sequence.

The pre-defined sequence in the method is: a deletion updating record is updated before a newly-adding record.

The pre-defined sequence in the method further comprises: a synchronization updating record notifying the terminal to delete all the group information is performed first; the deletion updating record is updated before the modification updating record; the newly-adding updating record is updated before the modification updating record.

Step 2 of the method comprises:
the network side sends a group information change record caused by the group change operation to the terminal according to the pre-defined sequence;
the terminal performs the group information updating corresponding to the group change operation record according to the pre-defined sequence of arrival of the group information change record caused by the group change operation.

Step 2 of the method comprises:
the network side sends a group information change record caused by the group change operation to the terminal;
after receiving the group information change records caused by all the group change operations, from the network side at this time, the terminal performs the group information updating corresponding to the group change operations according to the pre-defined sequence.

The invention further discloses a device for updating the group information in a PTT system, which wherein comprises:
group change operation recording means, set on the network side of the PTT system, configured to record the group change operation and / or the group information change record caused by the group change operation upon performing the group change operation on the terminal in the PTT system;
group information updating means, set on the network side of the PTT system or the terminal side, configured to update the group information change caused by the group change operation to the terminal according to a pre-defined sequence.

The technical effects of the present invention are:
In the present invention, when the group modification operation is performed on a terminal in a PTT system, the network side does not update the group information change caused by all the group change operation to the terminal, but performs a verification to the validity of group information change caused by the group change operation before the group information is updated to the terminal, and updates the group information change caused by the group change operation that passes the validity verification to the terminal. Consequently, the group information change caused by the group change operation of the network side can be correctly updated to the terminal when the terminal exists in a group with various identities, ensuring the group information synchronization between the network side and the terminal side.

### Description of the Drawings

Figure 1 is the flow schematic of the method for updating the group information in a PTT system in one embodiment of the present invention;
Figure 2 is the flow schematic of the method for updating the group information in a PTT system in another embodiment of the present invention;
Figure 3 is the flow chart of processing group information updating record, i.e., generating the group information change records according to the group change operation in an embodiment of the present invention;
Figure 4 is the flow chart of performing the validity judgment of group information change records in an embodiment of the present invention;
Figure 5 is the flow chart of the method for updating the group information in a PTT system in another embodiment of the present invention;
Figure 6 is the flow chart of realizing updating sequence setting on the network side in an embodiment of the present invention;
Figure 7 is the structural schematic of a device for updating group information in an embodiment of the present invention;
Figure 8 is the structural schematic of a device for updating group information in another embodiment of the present invention.

### Detailed Description of the Preferred Embodiments

A detailed description is provided hereinafter with reference to the accompanying drawings and the embodiments, so as to further clarify the objective, technical solutions and advantages of the present invention.

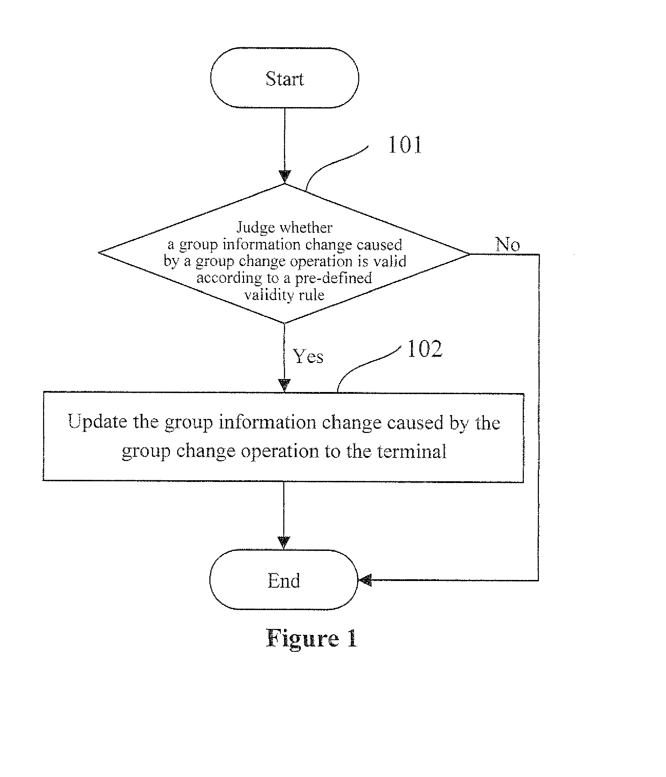

Figure 1 is the flow schematic of the method for updating the group information in a PTT system in one embodiment of the present invention. As shown in Figure 1, the method for updating the group information of Embodiment 1 comprises the following steps:
Step 101, when a group change operation is performed on a terminal of the PTT system, the network side of the PTT system judges whether a group information change caused by the group change operation is valid according to a pre-defined validity rule; if yes, execute Step 102; otherwise, end the process;
Step 102, update the group information change caused by the group change operation to the terminal.

The group change operation on a terminal, which allows the terminal to exist in a group with multiple identities, comprises: adding the terminal into one or more groups, being dynamically regrouped to one or more groups, deleting the terminal from one or more groups, cancelling dynamic regrouping of a terminal from one or more dynamically regrouped groups, dynamically regrouping one or more groups to another mother group, and canceling the dynamic regrouping of one or more groups from a dynamically regrouped mother group etc. When the terminal exists in a group with multiple identities, the adopted service rule is: if a group is being called, the direct members, dynamically regrouped members, the group members of a sub-group can all be called, and all the group information that the terminal can take part is stored in the terminal. According to the service rule, when a group information updating caused by a group change operation is happened, adding the terminal to a group not only need to keep the joined group in the terminal, but also should keep the mother group to which the joined group is dynamically regrouped in the terminal; modifying the group information not only need to modify the group information stored in the terminals as group members, but also need to modify the corresponding group information for the terminals that are dynamically regrouped to the group, and the information corresponding to the group for the group members of the sub-groups that are dynamically regrouped to the group. When a terminal withdraws from a group with one identity, the group information cannot be deleted from the terminal as long as it exists in the group with other identities yet. The group information updating should follow the rule mentioned above. Of course, the call service rules vary in different systems and the terminal may only keep the group information that needs to be called according to traditional group calling.

In the embodiment of the present invention, it can be pre-set on the network side and the terminal side that the multiple group change operations mentioned above is simply divided into three operation types: newly-adding, modification, and deletion, or is compressed into two operation types: newly-adding and deletion. Wherein, the operation that a terminal is added to a group with at least one identity is divided into an newly-adding operation type to the group, the operation that a terminal withdraws from a group with at least one identity is divided into a deletion operation to the group, and modifying the group attribute of a certain group to which a terminal belongs and modifying the member attribute that a terminal is as a group member of a certain group are divided into modification operation to the group.

Of course, the operation type of group change can be also divided into two types: newly-adding and deletion. Under this situation, if the operation type is of newly-adding, the terminal checks whether the corresponding group information already exists. If it does not exist, the corresponding group information is added to the group telephone directory. If it exists, the corresponding group information is modified according to the attributes in the newly-adding records. In the description of the embodiment of the present invention, an illustration is only given in the situation that is divided into the three operation types: newly-adding, modification, and deletion. The condition that is divided into two operation types is similar.

In the embodiment of the present invention, when the group change operation is performed on the terminal, it further comprises the step that the group change operation performed is recorded in the PHR in the PTT system network side, and generates the corresponding group change operation record. In Step 101 of the embodiment of the present invention, the validity verification on the group information change caused by the group change operation can be judged when the group information change record is caused by recording the group change operation, or verified when the network side performs the group information updating, for example, the validity verification is performed when PDS requests the PHR to perform the group information updating. A detailed illustration is given to the two verification manners in the following:
Manner 1 is that the network side judges the validity judgment for group information change of a terminal with multiple identities when the group information change record is recorded.
   Concretely, if a terminal withdraws from a group with one or more identities, the network side judges whether the terminal exists in the group with other identities other than the identity to be withdrawn; if yes, the deletion updating record is invalid and the deletion updating record is not recorded; otherwise, the deletion updating record is valid and the deletion updating record is recorded, and these prior newly-adding updating records and modification updating records are invalid, if the newly-adding updating records and the modification updating records exist prior before the deletion updating records are recorded; if the terminal joins a group with one or more identities and there is an deletion updating record in the PHR before the joining operation, the two operations are combined into one modification updating record, or the group information change record caused by the joining operation can be directly recorded as a newly-adding updating record. Under the situation that the record is a newly-adding updating record, the former deletion operation and the new adding operation at this time are respectively recorded as one deletion updating record and a newly-adding updating record, and the updating sequence should be controlled as deletion first followed by newly-adding when updating; Under the situation of the other group change operation, the group information corresponding to the group change operation only needs to be recorded directly.

By virtue of Manner 1, when the terminal is deleted with one or more identities from the group, if the terminal still exists in the group with any other identity, the PHR is not record the deletion updating record, avoiding the mismatch of the group information between the network side and the terminal side, and that the terminal deletes the group information, which is resulted from that situation that the deletion updating record is updated to the terminal

Manner 2 is that the multiple identities of the terminal and validity of updating record are not judged when the group change operation is recorded, but the verification is performed when the group information updates. The following two verification principles can be further used under the situation.

Principle 1: the former recorded deletion updating record and the latter recorded newly-adding updating record in the PHR are combined into a modification record; after the records are combined, judging whether the terminal exists in a group with any identity; if yes, the deletion updating record is valid and the newly-adding and modification updating records existed in the combined group information change operation record is invalid; otherwise, as long as the terminal exists in the group with any identity, the newly-adding and modification updating records existed in the combined group information change operation record is valid and deletion updating record is invalid.

Wherein, the purpose of combining the former deletion updating record and the latter newly-adding updating record is that preventing the lost of change updating during the period of the deletion and newly-adding. By virtue of the judgment performed before the deletion updating record is updated to the terminal, when the terminal is deleted with one or more identities, if the terminal still exists in the group with any other identity, it is avoided that the deletion updating record is updated to the terminal. Similarly, if the terminal does not exist in the group without any identity, the newly-adding and modification updating records are not updated to the terminal, avoiding the mismatch of the group information between the network side and the terminal side.

Principle 2: as to a same group of a same terminal, if the newly-adding and deletion updating records exist simultaneously and the terminal exists in the group with any identity, it is deleted first followed by newly added; if there is still a modification updating record existed, the update of modification change record is performed after the newly-adding updating record is updated; the judgment principle of the rest of records is the same as that of the previous one. The reason for the co-existence of newly-adding and modification operations is: under the situation that the terminal processes the newly-adding and modification operations differently and the user exists in a group with multiple identities, the user may have existed in the group with another identity, then the terminal finds that the newly-adding group already exists when the newly-adding information reaches the terminal. If the group information modification is performed during the period, the modification operation needs to be updated to the terminal.

The embodiment of the invention mainly aims at the validity judgment for the group change records on a same terminal in a same group.

In the embodiment of the invention, the process that the network side updates the group information change caused by the group change operation can be: the network side sends the group information updating request of PTT service to the terminal side, or the terminal side carries the random number and verification sum of group information and sends to the network side, then the network side finds the mismatch of the network side group information and the terminal side group information and sends the request of group information synchronizing.

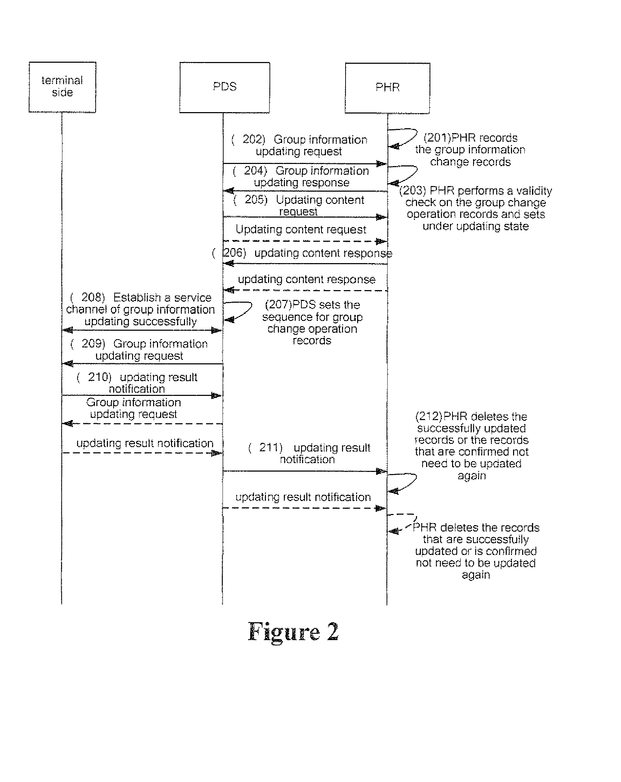

Figure 2 is the flow schematic of the method for updating the group information in a PTT system in another embodiment of the present invention. In the embodiment, the PTT system comprises: the network side and the terminal. Wherein, the network side comprises: PTT Dispatch Server (PDS) and PTT Home Register (PHR). As shown in Figure 2, the group information updating method according to embodiment 2 of the present invention comprises the following steps:
Step 201, the network side performs the group management or dispatch management, when the group change operation is performed on the terminal, the PHR records the group information change record caused by the group change operation;
Step 202, the PDS initiates a group information updating request, concretely, the PDS initiates the group information updating request at an optional time according to the prior art;
Step 203, the PHR performs a validity check on the group information change record caused by the group change operation of the terminal, so as to judge whether the group information change record caused by the group change operation is valid, and set the group information change record as: under updating state;
Step 204, the PHR returns the group information updating response to the PDS after the check is finished;
Step 205, the PDS requests the PHR for group information updating content;
Step 206, the PHR returns the group information updating content response to the PDS;
Step 207, the PDS sets the sequence of the updating content after all the updating contents are requested;
Step 208, group information updating service channel between the PDS and the terminal side is successfully built;
Step 209, the PDS sends the group information updating request to the terminal;
Step 210, the terminal sends the group information updating response to the PDS;
Step 211, the PDS sends the group information updating result to notify the PHR;
Step 212, the PHR deletes the successfully updated records or the records that are confirmed not need to be updated again.

Wherein, the Step 207 is mainly used for controlling the group information updating to be performed according to a pre-defined sequence. Generally, a terminal in a PTT system may have joined in multiple groups. For example, when the group change operation is performed on all multiple groups that a terminal joins in, the sequence setting for all group information change records on a same terminal can avoid the situation that the group information sometimes cannot be correctly updated to the terminal and the problem that results in an inadequate experience of users, which are mentioned in the background of the invention.

In the embodiment, the sequence of some steps can be changed to be further optimized, for instance, the group information updating service channel can be performed before the updating content request. If the service channel is not successfully built, the updating content request is no longer to be performed.

In addition, due to the limitation of the data package size, steps 205, 206, 209, 210, 211, and 212 can be executed for many times. The message pairs of Steps 205, 206, 211, and 212 can be asynchronous message. Because the group information updating sequence of the embodiment is controlled by the PDS, the message pair of Step 209 and Step 210 is synchronizing message. If the sequence setting of the updating records is finished at the terminal, the message pair of Step 209 and Step 210 is further asynchronous message.

In the embodiment, the validity check of group information change caused by group change operation is performed in group information updating, adopting the check method of Manner 2.

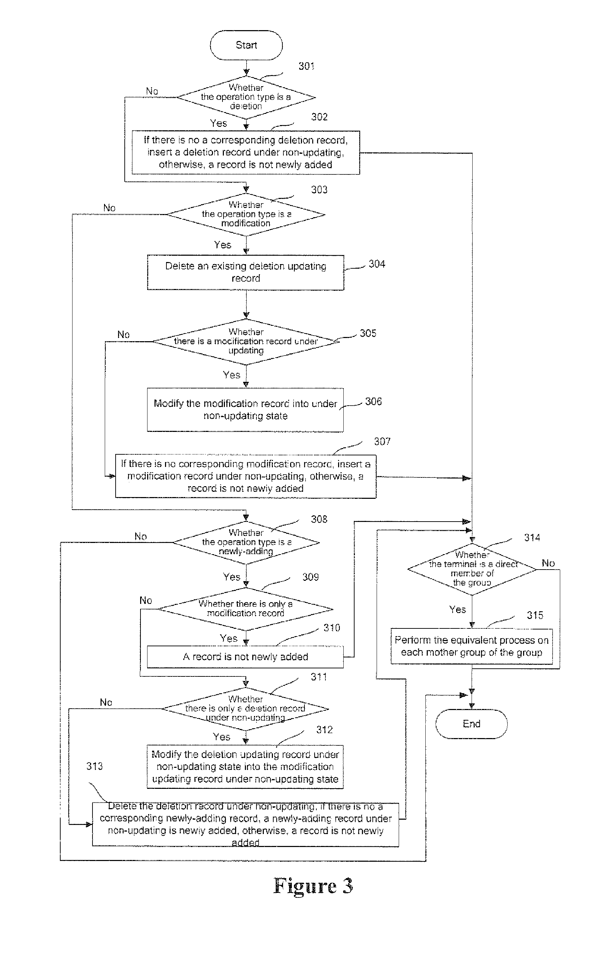

Figure 3 is the process flow chart of group information change record according to the group change operation records generated by the group change operation in an embodiment of the present invention. The process flow can be realized through a function which is used for generating corresponding group change operation record according to the group change operation, for instance, adding a terminal into a certain group, being dynamically regrouped to a certain group, modifying the attributes of a certain group in which a terminal exists, modifying the attributes of a group member of a certain group in which a terminal exists, deleting a terminal from a certain group, and/or generating corresponding group information updating records while performing dynamically regrouping cancelling on a terminal from a certain group. The process flow is called to record the corresponding update of the group information caused by the group change operations in the case of group management and modifying group attributes, modifying group member attributes.

In the embodiment of the present invention, the above process flow for generating the group information updating record is based on the following service rule: the group members, dynamically regrouped members, the direct members of a sub-group that is dynamically regrouped to the group can all be called if the group is called. In addition, all the group information of the call that the terminal takes part is stored in the terminal. In a system with a different service rule, the suitable processing principle for updating records should be designed according to the actual situations.

Because the validity check for group information change caused by the group change operation adopting Manner 2 is performed in group information updating, the multiple identities of the terminal is not taken into consideration while generating updating records, but the updating records are somewhat optimized according to a logic. Before the updating is performed, the records that need to be updated are marked as under updating, so as to differentiate from the newly-added updating records during the updating. The newly-added updating records during the updating are updated to the terminal when the next group information updating is initiated by the network side. When the terminal returns the group information updating result to the network side, the network side will only delete the corresponding updating record identified updating.

The logic realized through the process flow is as follows:
(1) As to a deletion operation, if there already exists a corresponding deletion updating record, no matter the deletion updating record is under updating state or non-updating state, a updating record is not newly added; if the terminal is a direct member of the group, the deletion updating record should be prepared for each mother group that withdraws from the group;
(2) As to a newly-adding operation, if there is only corresponding modification updating records for the terminal and the group, the terminal has joined in the group with at least one identity and the group information has already been updated to the terminal, and a updating record is not newly added; if there exists and only exists non-updating deletion updating records on the terminal and the group, the deletion updating records only need to be modified into modification updating records; otherwise, the corresponding non-updating deletion updating records on the terminal and the group are deleted, then a judgment is made to judge whether there is a corresponding newly-adding updating record. If there is no one, a corresponding newly-adding updating record is newly added. If there exists, a record is not newly added;
(3) As to a modification operation, if there is the modification operation , the terminal existing in the group with at least one identity is indicated, therefore the former stored deletion updating record does not need to be updated to the terminal but be directly deleted; if there is a modification updating record under updating, it is changed into not under updating, so as not to delete the record when the updating response is received, the modified group information then will be updated to the terminal next time; if there already exists a corresponding modification updating record, a updating record is not newly added, otherwise, a corresponding modification updating record is newly added.

Concretely, Figure 3 shows an example of the process flow for generating group change operation records, which is in line with the above process logic. As shown in Figure 3, the process example for generating the group change operation record comprises:
Step 301, whether the group change operation type being a deletion operation is judged; if yes, turn to Step 302; otherwise, execute Step 303;
the Step 302, judge whether there already exists a corresponding deletion updating record; if yes, insert a non-updating deletion updating record, then turn to Step 314; otherwise, a updating record is not newly added, then turn to the Step 314;
the Step 303, judge whether the group change operation type is a modification operation; if yes, execute Step 304; otherwise, execute Step 308;
the Step 304, delete the existing deletion upgrading records, and then execute Step 305;
the Step 305, judge whether there is a modification updating record under updating state; if yes, execute Step 306; otherwise, execute Step 307;
the Step 306, modify the modification updating record under updating state into under non-updating state, then end the process;
the Step 307, judge whether there is a corresponding modification updating record; if not, insert a modification updating record under the state of non-updating, then execute the Step 314; otherwise, a updating record is not newly added, then execute the Step 314;
the Step 308, judge whether the group change operation type is a newly- adding operation; if yes, execute Step 309; otherwise, end the process;
the Step 309, judge whether there is modification updating record only; if yes, turn to Step 310; otherwise, execute Step 311;
the Step 310, a record is not newly added, then end the process;
the Step 311, judge whether there is only one deletion updating record under non-updating state ; if yes, execute Step 313 ; otherwise, execute Step 313;
the Step 312, modify the deletion updating record under non-updating state into the modification updating record under non-updating state, and then end the process;
the Step 313, delete the deletion updating record under non-updating state, and judge whether there no exists a corresponding newly-adding updating record; if yes, a newly-adding updating record under non-updating is newly added, then turn to the Step 314; otherwise, a updating record is not newly added, and then turn to the Step 314;
the Step 314, judge whether the terminal is a direct member of the group, not a dynamic regrouped group member; if yes, execute Step 315; otherwise, end the process;
the Step 315, perform the equivalent group change operation of each mother group to which the group belongs, namely, the record of group change operation for the group is the same as the group.

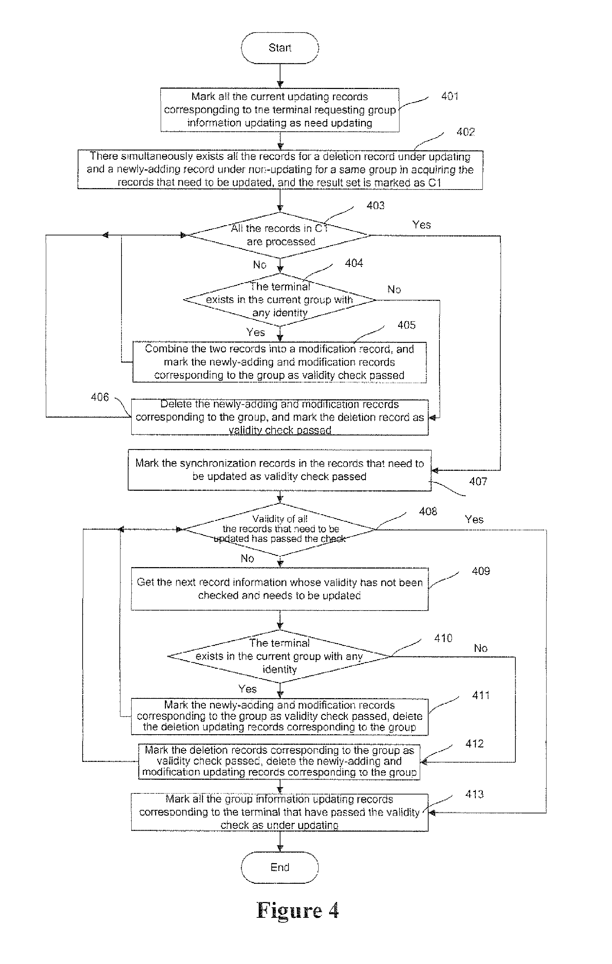

Figure 4 is the flow chat of performing the validity judgment of group information change records in an embodiment of the present invention. As shown in Figure 4, the flow of validity judgment comprises the following steps:
Step 401, mark all the current group change operation records, namely, the group information updating records of the terminal requesting group information updating as need updating;
Step 402, get all the records that there simultaneously exists a deletion record under updating and a newly-adding record under non-updating for a same group from the records that need to be updated, and the result set is marked as C1;
Step 403 to Step 406, perform the validity check on each record in C1. If the terminal still exists in a group with any identity, combine the deletion updating record under updating and the newly-adding updating record under non-updating into a modification updating record for the same group, wherein, if the modification updating record exists, the two updating records are deleted; and mark the newly-adding and modification updating records corresponding to the group as validity checked; If the terminal exists in the group without any identity, the corresponding newly-adding and modification updating records are deleted, and mark the deletion record as validity passed until the record process for C1 is over.
Step 407, directly mark the synchronizing record as valid in the records that need to be updated;
Step 408 to Step 412, perform the validity check on all the other updating records whose validities have not been checked. The principles to be followed are: if the terminal still exists in a group with any identity, delete the corresponding deletion updating records and mark the newly-adding and modification updating records of the group as validity check passed; if the terminal exists in a group without any identity, delete the corresponding newly-adding and modification records, and mark the deletion updating records as validity check passed until all the validities of the updating records that need to be updated are checked;
Step 413, mark all the group information updating records, corresponding to the terminal, that pass the validity check, namely, as under updating, so as to differentiate the updating records newly generated during the updating. When the terminal side returns the group information updating result response to the network side, the PHR only deletes the corresponding updating records that are marked as under updating.

A terminal can join multiple groups in a PTT system. Due to the limited capacity of the terminal, the network side exerts limitation on the total amount of the groups that the terminal joins according to the biggest amount of groups allowed to store by the terminal, while performing the group management operation; wherein, the principle for calculating the amount of joined groups is: if the terminal exists in a group with any identity, a user has joined the group; if the user exists in a group with multiple identities, it is only calculated once. In the embodiment of the present invention, the sequence of group change operation updating can be controlled to avoid the generated problem of the inaccurate group information updating and inadequate user experience, which are resulted from no consideration of updating sequences in the prior art.

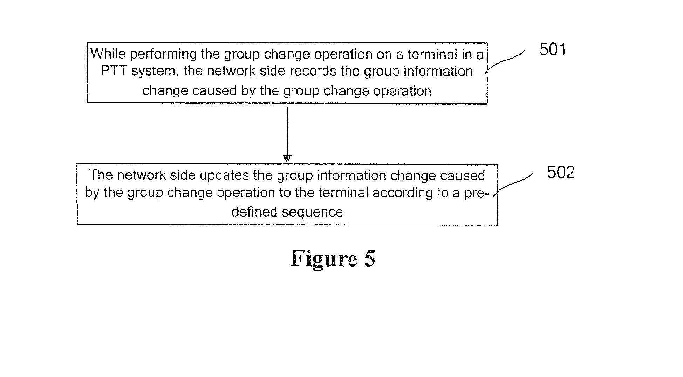

Figure 5 is the flow chat of method for updating the group information in a PTT system in another embodiment of the present invention. As shown in Figure 5, the method for updating the group information updating method in another embodiment of the present invention comprises the following steps:
Step 501, while performing a group change operation on a terminal in a PTT system, the network side of the PTT system records the group information change caused by the group change operation;
Step 502, the network side updates the group information change caused by the group change operation according to the pre-defined sequence to the terminal.

The embodiment of the present invention controls the sequence of the group information updating, further ensuring that the group information of the network side can be accurately updated to the terminal, particularly when a group information updating for a same terminal and multiple groups exists.

For instance, due to the limitation of the terminal capacity, the biggest group amount allowed to store is set in the group telephone directory of a terminal. While the group information updating is performed in practice, all the group change operation records performed on the terminal, comprises that the group change operation records on multiple groups, are updated in the pre-defined sequence. Wherein, while the performed group change operations comprise a synchronizing operation, the synchronizing operation should ensure that the terminal processes the record first in updating , as the operation for notifying the terminal to delete the group information of all the groups stored thereof.

In addition, if the terminal joins some groups first and is updated, then withdraws from these groups and joins some other groups, and when these deletion and newly-adding operations are updated in a group information updating, if the newly-adding operation is updated before the deletion operation, an illusion may appear at the terminal that the number of the joined groups exceed the capacity of the terminal group telephone directory. In order to avoid the situation, the deletion updating record should be controlled before the newly-adding updating record. Under the situation that the newly-adding and modification updating records exist at the same time, if the modification updating record is updated first, the error that the modified group does not exist may appear, so the newly-adding updating record should ensure to be updated before the modification updating record. In conclusion, the general updating sequence may be: the synchronization updating record notifying the terminal to delete all the group information being updated first; the deletion updating records are earlier than newly-adding updating records; the deletion updating records are earlier than the modification updating records; the newly-adding updating records are earlier than the modification updating records. It can be summed up with one word: first synchronization, then deletion, then newly-adding, and finally modification. In a system of different service logic, the required updating sequence may be different, but the deletion updating records should all be updated before the newly-adding updating records.

Furthermore, the updating sequence according to the pre-defined sequence can be realized on the network side or the terminal. If the setting sequence is realized at the network side, that all the updating information should reach the terminal according to the sequence and the terminal should process them according to the sequence of arrival should be ensured in the system process flow after setting sequence. Furthermore, if the updating records need to be divided into multiple information packets to be sent to the terminal, the network side can continue sending the next updating request to the terminal after the terminal finishes processing the preceding packet and sends updating successful response to the network side. If the sequence is set on the terminal, the terminal needs to perform the updating sequence setting after receiving all the updating information of the updating this time, and then performs the updating process, with a high requirement to the process capability of the terminal.

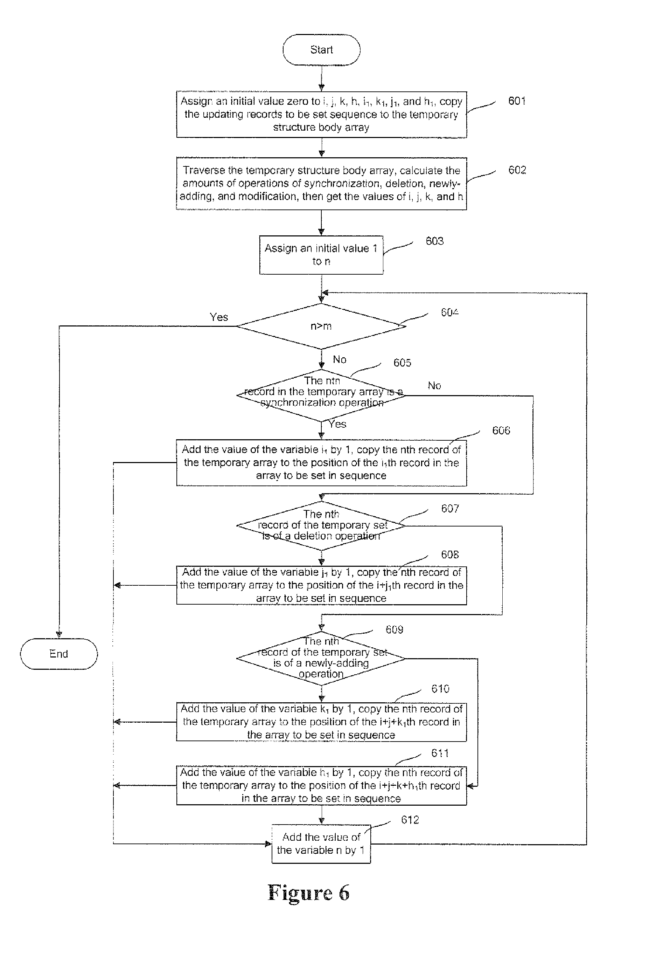

Figure 6 is the flow chat of realizing updating sequence setting on the network side in an embodiment of the present invention. Figure 6 shows only a schematic flow for sequence setting, not as a limitation to the present invention. In the flow of the sequence setting, supposing that each group change operation records of a terminal are stored in a structure body and all the group change operation records form a structure body set. The variables of m and n respectively indicate the total amount of the updating records and the current processing
record amount. The variables of i, j, k, and h respectively indicate the amounts of group information change records of synchronization, deletion, newly-adding, and modification in the updating operation this time; the variables of i₁, j₁, k₁, and h₁ respectively indicate which updating records of synchronization, deletion, newly-adding, and modification are currently processed. In addition, in order to reduce the number of times of moving the structure body and accelerate the speed of sequencing, it is predefined another temporary structure body set, which has the same size as the structure body array to be sequenced. As shown in Figure 6, the sequence setting flow comprises the following steps:
Step 601, assign an initial value zero to every counting variables, and copy the content of structure body array to be set sequence to the pre-defined temporary structure body array;
Step 602, traverse all the temporary structure body array, respectively calculate the amounts of synchronization updating records, deletion updating records, newly-adding updating records, and modification updating records, and obtain the values for the variables of i, j, k, and h.
Step 603, assign an initial value 1 to n;
Step 604, if n>m, the sequence setting is over, otherwise, turn to Step 605;
the Step 605, if the nth record of the temporary structure body array is a synchronization updating record, turn to Step 606, otherwise, turn to Step 607;
the Step 606, the value of the variable i₁ is added by 1, and copy the nth record of the temporary structure body array to the position of the i₁th record of the group to be set in an sequence, turn to Step 612;
Step 607, if the nth record of the temporary structure body array is deletion updating record, turn to Step 608, otherwise, turn to Step 609;
the Step 608, the value of the variable jᵢ is added by 1, and copy the nth record of the temporary array to the position of the i+j₁th record of the group to be set in a sequence, turn to Step 612;
Step 609, if the nth record of the temporary structure body array is a newly-adding updating record, turn to Step 610, otherwise, turn to Step 611;
the Step 610, the value of the variable k₁ is added by 1, and copy the nth record of the temporary structure body array to the position of the i+j+k₁th record of the group to be set in an sequence, turn to the Step 612;
the Step 611, the value of the variable h₁ is added by 1, and copy the nth record of the temporary structure body array to the position of the i+j+k+h₁th record of the group to be set in an sequence, turn to the Step 612;
the Step 612, the value n is added by 1.

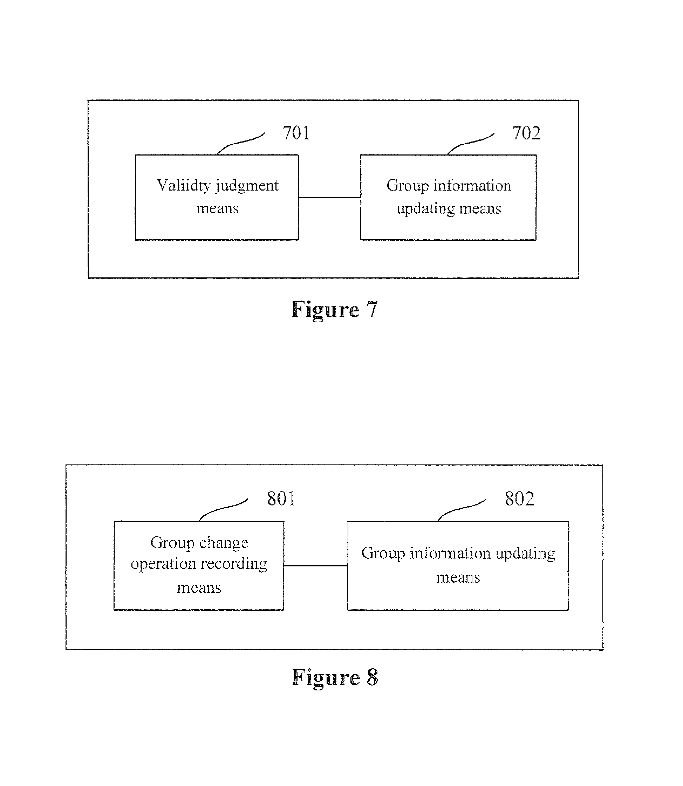

In addition, the present invention discloses a device for updating the group information in a PTT system. Figure 7 is the structural schematic of a device for updating group information in an embodiment of the present invention. As shown in Figure 7, the updating device of an embodiment for the present invention comprises:
validity judgment means 701, set on the network side of the PTT system, configured to judge whether a group information change caused by a group change operation is valid according to a pre-defined validity rule while performing the group change operation to a terminal;
group information updating means 702, configured to update a valid group information change which is confirmed by the validity judgment means and caused by the group change operation to the terminal.

Figure 8 is the device for updating group information in another embodiment of the present invention. As shown in Figure 8, the updating device in an embodiment of the present invention comprises:
group change operation recording means 801, set on the network side of the PTT system, configured to record a group information change record caused by a group change operation upon performing the group change operation on a terminal in the PTT system;
group information updating means 802, set on the network side of the PTT system or the terminal side, configured to update the group information change caused by the group change operation to the terminal according to a pre-defined sequence.

The above is only the preferred embodiments of the present invention. For those skilled in the art, it is obvious that various improvements and modifications falling into the principle of the invention can be made. The improvements and modifications will be deemed falling within the protection scope of the invention.

## Claims

1. A method for updating group information in a PTT system, **characterized by**, comprising the following steps:
Step 1, while performing a group change operation on a terminal in the PTT system, the network side of the PTT system judging whether a group information change caused by the group change operation is valid according to a pre-defined validity rule; if yes, executing Step 2, otherwise, ending the process;
Step 2, updating the group information change caused by the group change operation to the terminal.

2. The method according to claim 1, **characterized in that** the network side of the PTT system performs the validity judgment upon recording the group information change caused by the group change operation, particularly comprising:
when the group change operation is an operation of deleting the terminal with one or more identities from a group, the network side judging whether the terminal exists in the group without any identity other than the one or more identities of the deletion; if yes, a deletion updating record caused by the deletion operation being valid, recording the deletion updating record in a PTT home register, PHR, and a newly-adding updating record and a modification updating record that have already existed in the PHR prior to recording the deletion updating record being invalid; otherwise, the deletion updating record caused by the deletion operation being invalid, and not recording the deletion updating record.

3. The method according to claim 2, **characterized by**, further comprising:
when the group change operation is a newly-adding operation of joining a group with one or more identities, judging whether a deletion updating record has been recorded in the PHR; if yes, combining the newly-adding updating record and the deletion updating record into one modification updating record, or directly recording the newly-adding updating record and controlling, upon updating, the updating sequence as deletion first followed by newly-adding.

4. The method according to claim 1, **characterized in that**, the network side of the PTT system performs the validity judgment upon performing group information updating, particularly comprising:
Step a, when the group change operation is performed on the terminal in the PTT system, the PHR on the network side recording the group information change caused by the group change operation, and generating a corresponding group information change record;
Step b, a PTT Dispatch Server, PDS, on the network side sending a group updating request to the PHR;
Step c, the PHR judging whether the terminal exists in the group without any identity according to the recorded group information change caused by the group change operation; if yes, in the group information change caused by the group change operation, a recorded deletion updating record being valid, and a recorded newly-adding updating record and a recorded modification updating record being invalid; otherwise, in the group information change caused by the group change operation, the recorded deletion updating record being invalid, and the recorded newly-adding updating record and the recorded modification updating record being valid.

5. The method according to claim 4, **characterized in that** Step c comprises:
the PHR combining the recorded deletion updating record prior recorded and the recorded newly-adding updating record posterior recorded in the group information change caused by the group change operation into one modification updating record;
after the combination is performed, the PHR judging whether the terminal exists in the group without any identity; if yes, in the group information change caused by the group change operation, the recorded deletion updating record being valid, and the recorded newly-adding updating record and the recorded modification updating record being invalid; otherwise, in the group information change caused by the group change operation, the recorded deletion updating record being invalid, and the recorded newly-adding updating record and the recorded modification updating record being valid.

6. The method according to claim 4 or 5, **characterized in that** Step a comprises:
when the group change operation is a deletion operation, if there already exists a deletion updating record for the group, no new record being added, and if the terminal is a direct member of the group, it is further comprised to add a deletion updating record for each mother group of the group;
when the group change operation is a newly-adding operation, if there is only a corresponding modification updating record of the group in the existing group change record, no updating record being newly added;
when the group change operation is a modification operation, if a deletion updating record is stored, deleting the deletion updating record; and if there is already a corresponding modification updating record, no updating record being newly added, otherwise, a modification updating record corresponding to the modification operation being newly added.

7. The method according to claim 1, **characterized in that** the network side of the PTT system performs the validity judgment upon performing group information updating, particularly comprising:
when the group change operation is performed on the terminal in the PTT system, the PHR on the network side recording the group information change caused by the group change operation;
the PDS on the network side sending a group updating request to the PHR;
when both a newly-adding updating record and a deletion updating record are recorded in the PHR, judging whether the terminal exists in the group without any identity; if yes, in the group updating record, the recorded deletion updating record being valid, and the recorded newly-adding updating record and a recorded modification updating record being invalid; otherwise, the newly-adding updating record and the deletion updating record being valid, and performing first the group information updating for the deletion updating record, then performing the group information updating for the newly-adding updating record; and when there is a modification updating record, performing the group information updating for the modification updating record after performing the group information updating for the newly-adding updating record .

8. The method according to any of the claims 1 to 5, and 7, **characterized in that** in Step 2, the network side updates the group information change caused by the group change operation of the terminal to the terminal according to a pre-defined sequence.

9. The method according to claim 8, **characterized in that** the pre-defined sequence is: the deletion updating record is updated before the newly-adding record.

10. The method according to claim 9, **characterized in that** the pre-defined sequence further comprises: synchronization updating record notifying the terminal to delete all the group information being updated first; the deletion updating record is updated before the modification updating record; and the newly-adding updating record is updated before the modification updating record.

11. A device for updating group information in a PTT system, **characterized by**, comprising:
validity judgment means, set on the network side of the PTT system, configured to judge whether a group information change caused by a group change operation is valid according to a pre-defined validity rule while performing the group change operation to a terminal;
group information updating means, configured to update a valid group information change, which is confirmed by the validity judgment means and caused by the group change operation, to the terminal.

12. The device according to claim 11, **characterized in that** the validity judgment means is set in the PHR on the network side, to perform the judgment when the group information change caused by the group change operation is being recorded or a group information updating is being performed.

13. A method for updating group information in a PTT system, **characterized by**, comprising the following steps:
Step 1, when a group change operation is performed on a terminal in the PTT system, the network side of the PTT system recording a group information change caused by the group change operation;
Step 2, the network side updating the group information change caused by the group change operation to the terminal according to a pre-defined sequence.

14. The method according to claim 13, **characterized in that** the pre-defined sequence is: a deletion updating record is updated before a newly-adding updating record.

15. The method according to claim 14, **characterized in that**, the pre-defined sequence further comprises: synchronization updating record notifying the terminal to delete all the group information being updated first; the deletion updating record is updated before the modification updating record; and the newly-adding updating record is updated before the modification updating record.

16. The method according to any of the claims 13 to 15, **characterized in that** Step 2 comprises:
the network side sending a group information change record caused by the group change operation to the terminal according to the pre-defined sequence;
the terminal performing the group information updating corresponding to the group change operation according to the sequence of arrival of the group information change record caused by the group change operation.

17. The method according to any of the claims 13 to 15, **characterized in that** Step 2 includes:
the network side sending a group information change record caused by the group change operation to the terminal;
after receiving the group information change records caused by all the group change operations from the network side at this time, the terminal performing the group information updating corresponding to the group change operations according to the pre-defined sequence.

18. A device for updating group information in a PTT system, **characterized by**, comprising:
group change operation recording means, set on the network side of the PTT system, configured to record a group information change caused by a group change operation upon performing the group change operation on a terminal in the PTT system;
group information updating means, set on the network side of the PTT system or the terminal side, configured to update the group information change caused by the group change operation to the terminal according to a pre-defined sequence.
